(19) Europäisches Patentamt / European Patent Office / Office européen des brevets

(11) **EP 3 273 317 A1**

(12) **DEMANDE DE BREVET EUROPEEN**

(43) Date de publication:
**24.01.2018 Bulletin 2018/04**

(51) Int Cl.:
***G05D 1/00*** *(2006.01)* ***A63H 27/00*** *(2006.01)*

(21) Numéro de dépôt: **17180644.1**

(22) Date de dépôt: **11.07.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **22.07.2016 FR 1657016**

(71) Demandeur: **Parrot Drones**
**75010 Paris (FR)**

(72) Inventeur: **LEURENT, Edouard**
**75005 Paris (FR)**

(74) Mandataire: **Dupuis-Latour, Dominique et al**
**Bardehle Pagenberg**
**10, boulevard Haussmann**
**75009 Paris (FR)**

(54) **SYSTÈME AUTONOME DE PRISE DE VUES ANIMÉES COMPRENANT UN DRONE ET UNE STATION AU SOL, ET PROCÉDÉ ASSOCIÉ**

(57) Les déplacements du drone sont définis par des ordres de pilotage appliqués à un ensemble de groupes propulseurs du drone, le drone se déplaçant selon une trajectoire au moins en partie prédéterminée pour réaliser une prise de vues animée d'une cible. Le drone ajuste l'angle de visée de la caméra au cours de ses déplacements et le cas échéant de ceux de la cible pour qu'à chaque instant l'image prise par la caméra contienne la position de la cible. Le système comprend des moyens (110) pour déterminer une trajectoire statique du drone pour la prise de vues, des moyens (120) pour déterminer une dynamique de déplacement du drone sur la trajectoire statique, et des moyens (130) pour générer des instructions de vol pour le drone à partir des deux déterminations et d'informations de position de la cible au cours du temps.

Fig.3

**Description**

L'invention concerne les appareils motorisés volants pilotés à distance, ci-après désignés généralement sous la dénomination de "drones".

L'invention s'applique tout particulièrement aux drones à voilure tournante tels que les quadricoptères, dont un exemple typique est le *Bebop* de Parrot SA, Paris, France, qui est un drone équipé d'une série de capteurs (accéléromètres, gyromètres trois axes, altimètre), d'une caméra frontale captant une image de la scène vers laquelle est dirigé le drone, et d'une caméra de visée verticale captant une image du terrain survolé.

Mais l'invention peut s'appliquer aussi bien à d'autres types de drones, par exemple les drones à voilure fixe, notamment de type "aile volante" tel que par exemple le modèle *eBee* de SenseFly, Cheseaux-Lausanne, Suisse, qui est un drone de cartographie professionnelle de terrain, ou encore le modèle *Disco* récemment présenté par Parrot SA, Paris, France.

Les drones à voilure tournante sont pourvus de rotors multiples entraînés par des moteurs respectifs commandables de manière différenciée afin de piloter le drone en attitude et en vitesse.

Les documents WO 2010/061099 A2 et EP 2 364 757 A1 (Parrot SA) décrivent un tel drone ainsi que son principe de pilotage par l'intermédiaire d'un terminal tel qu'un téléphone ou baladeur multimedia à écran tactile et accéléromètre intégré, par exemple un téléphone cellulaire de type *iPhone* ou une tablette multimedia de type *iPad* (marques déposées). Ces appareils incorporent les divers organes de contrôle nécessaires à la détection des commandes de pilotage et à l'échange bidirectionnel de données avec le drone via une liaison sans fil de type réseau local Wi-Fi (IEEE 802.11) ou Bluetooth. Ils sont en outre pourvus d'un écran tactile affichant l'image captée par la caméra frontale du drone, avec en superposition un certain nombre de symboles permettant l'activation de commandes par simple contact du doigt de l'utilisateur sur cet écran tactile.

La caméra video frontale du drone peut être utilisée pour capter des séquences d'images d'une scène vers laquelle est tourné le drone. L'utilisateur peut ainsi se servir du drone de la même façon que d'une caméra ou d'un caméscope qui, au lieu d'être tenu à la main, serait porté par le drone. Les images recueillies peuvent être enregistrées puis diffusées, mises en ligne sur des sites web d'hébergement de séquences video, envoyées à d'autres internautes, partagées sur des réseaux sociaux, etc.

La caméra frontale est avantageusement une caméra orientable, afin d'orienter de façon contrôlée dans une direction prédéterminée l'axe de visée, et donc le champ des images transmises avec le flux video. Une technique mise en oeuvre notamment dans l'appareil *Bebop* précité et décrite dans le EP 2 933 775 A1, consiste à utiliser une caméra grand-angle haute définition munie d'un objectif à champ hémisphérique de type *fis-heye* couvrant un champ d'environ 180° et à fenêtrer en temps réel l'image brute délivrée par ce capteur, par un traitement logiciel assurant la sélection des pixels utiles de l'image brute dans une zone de capture déterminée en fonction d'un certain nombre de paramètres, dont des commandes de pointage dans la direction d'une cible particulière choisie par l'utilisateur ou suivie automatiquement par le drone. En variante, ou même en complément, du contrôle de l'axe de visée de la caméra par un logiciel de fenêtrage, il est également possible de monter la caméra sur un support articulé trois-axes de type *gimbal* avec suspension à la Cardan, muni de servomoteurs pilotés en fonction des données gyrométriques et des commandes de pointage. L'invention s'applique bien évidemment à tout type de caméra, orientable ou non, et quel que soit son mode de pointage.

Dans un mode dit de poursuite (*tracking*), le drone peut être programmé pour suivre une cible mobile dont les coordonnées sont connues et pour que pendant son vol, l'axe de visée de la caméra soit dirigé vers ladite cible. Cette cible est typiquement le terminal lui-même, porté par un utilisateur qui peut être en mouvement (par exemple en train de pratiquer un sport où il se déplace - course, glisse, conduite, etc.). Dans ce mode, le drone est capable de filmer les évolutions de l'utilisateur sans que celui-ci n'ait à agir sur les déplacements du drone et sur l'axe de visée de la caméra.

À cet effet, les coordonnées du terminal, obtenues par une centrale GPS équipant celui-ci de façon en soi connue, sont communiquées au drone par la liaison sans fil, et le drone peut donc ajuster ses déplacements de manière à suivre le terminal et à ce que l'axe de visée de la caméra reste dirigé vers le terminal.

On connait déjà cette fonctionnalité dans certains produits du commerce, par exemple d'après le FR 3 031 402 A1 (également publié en tant que US 2016/194079 A1), qui propose de préprogrammer des trajectoires autour de la cible et de permettre à l'utilisateur de choisir l'une d'entre elles dans une "bibliothèque de mouvements de caméra" pour le pilotage automatique du drone en mode *tracking.*

Le US 9 164 506 B1, quant à lui, illustre de façon détaillée une technique de *target tracking* par un drone, notamment un drone muni d'une caméra montée sur une nacelle orientable.

Mais les possibilités de prise de vues offertes par ces dispositifs restent très limitées en termes de trajectoires pouvant être parcourues par le drone pendant le filmage, et en termes de la façon dont le drone parcourt cette trajectoire.

Par exemple, dans le FR 3 031 402 A1 précité aucune indication n'est donnée sur la manière de parcourir la trajectoire préprogrammée, sous le contrôle de l'utilisateur qui souhaiterait influencer la vitesse de déplacement du drone sur la trajectoire (statique) sélectionnée, de manière à pouvoir en accélérer/ralentir le déplacement, immobiliser le drone à un certain point, l'amener à parcourir la trajectoire en sens inverse, etc.

L'idée de base de l'invention consiste, pour pallier ces limitations, à séparer la génération des trajectoires (choix d'une trajectoire en cloche, en cercle, etc.) de la manière dont le drone va se déplacer sur ces trajectoires.

Un but de l'invention est de proposer à l'utilisateur des possibilités élargies de prises de vues animées d'une cible potentiellement en mouvement, et de mieux contrôler les déplacements du drone au cours de ces prises de vues.

Il s'agit par exemple, pour une courbe en cloche, d'éviter un ralentissement au sommet de la parabole et une vitesse de plus en plus élevée, en bas de celle-ci, lorsque le drone se rapproche de la cible.

L'invention propose à cet effet, selon un premier aspect, un système de prise de vues animées du type général décrit par le FR 3 031 402 A1 précité, c'est-à-dire comprenant un drone pourvu d'une caméra et une station au sol communiquant par une liaison sans fil avec le drone. Les déplacements du drone sont définis par des ordres de pilotage appliqués à un groupe propulseur ou un ensemble de groupes propulseurs du drone, et le drone est apte à se déplacer selon une trajectoire au moins en partie prédéterminée pour réaliser une prise de vues animée d'une cible, et à ajuster l'angle de visée de la caméra au cours des déplacements du drone et le cas échéant de la cible pour qu'à chaque instant l'image prise par la caméra contienne la position de la cible. Pour ce faire, le système comprend : des moyens pour déterminer une trajectoire statique du drone par rapport à la cible pour la prise de vues ; des moyens pour produire des informations de position de la cible au cours du temps ; et des moyens pour générer des instructions de vol pour le drone à partir i) de la trajectoire statique déterminée et ii) des informations de position de la cible.

De façon caractéristique de l'invention, le système comprend en outre des moyens pour déterminer, séparément de la détermination de la trajectoire statique, une dynamique de déplacement du drone sur la trajectoire statique, et les moyens pour générer les instructions de vol pour le drone sont aptes à générer lesdites instructions également à partir iii) de la dynamique de déplacement du drone sur la trajectoire statique.

Selon diverses caractéristiques subsidiaires avantageuses :

- les moyens pour déterminer une trajectoire statique du drone comprennent des moyens associés à une interface utilisateur de la station au sol pour sélectionner une trajectoire parmi un ensemble de trajectoires mémorisées ;
- les moyens pour déterminer une trajectoire statique du drone comprennent des moyens associés à une interface utilisateur pour faire ajuster au moins un paramètre de la trajectoire sélectionnée ;
- les trajectoires mémorisées à sélectionner comprennent au moins deux trajectoires choisies dans le groupe suivant : les trajectoires en cloche, les trajectoires sur courbe fermée, les trajectoires en hélice, les trajectoires en chandelle ;
- le système comprend des moyens pour ajuster sur la trajectoire déterminée une position de début de prise de vues et une position de fin de prise de vues ;
- les moyens pour déterminer une dynamique de déplacement comprennent une interface utilisateur permettant de déterminer une évolution de vitesse sur la trajectoire statique ;
- la détermination de l'évolution de la vitesse comprend la détermination de points d'arrêt du drone.

La caméra peut être une caméra fixe à champ large de type *fish-eye*, et il est alors prévu des moyens d'ajustement dudit angle de visée de la caméra, aptes à recadrer et retraiter les images à champ large prises par la caméra, ou bien une caméra montée sur un support articulé trois-axes de type *gimbal* avec suspension à la Cardan muni de servomoteurs, et les moyens d'ajustement dudit angle de visée de la caméra sont des moyens aptes à piloter lesdits servomoteurs.

On propose, selon un deuxième aspect de l'invention, une station au sol comprenant, de manière en elle-même connue : des moyens pour communiquer par une liaison sans fil avec un drone pourvu d'une caméra pour lui envoyer des instructions de vol de manière à ce qu'il se déplace selon une trajectoire au moins en partie prédéterminée pour réaliser une prise de vues animée d'une cible liée à la station au sol ; des moyens pour déterminer une trajectoire statique du drone par rapport à la station au sol pour la prise de vues ; des moyens pour produire des informations de position de la station au sol au cours du temps ; et des moyens pour générer lesdites instructions de vol à partir i) de la trajectoire statique déterminée et ii) des informations de position de la station au sol.

De façon caractéristique de l'invention, cette station comprend en outre : des moyens pour déterminer une dynamique de déplacement du drone sur la trajectoire statique ; et des moyens pour déterminer, séparément de la détermination de la trajectoire statique, une dynamique de déplacement du drone sur la trajectoire statique. De plus, les moyens pour générer les instructions de vol pour le drone sont aptes à générer lesdites instructions également à partir iii) de la dynamique de déplacement du drone sur la trajectoire statique.

On propose par ailleurs, selon un troisième aspect de l'invention, un procédé pour déterminer une trajectoire devant être suivie par un drone pour la réalisation d'une prise de vues animées d'une cible le cas échéant en mouvement, caractérisé en ce qu'il comprend les étapes suivantes :

- déterminer une trajectoire statique devant être parcourue par le drone par rapport à la cible ;
- déterminer, séparément de la détermination de la trajectoire statique, une dynamique de déplacement du drone sur cette trajectoire statique ;

- déterminer les coordonnées de la cible au cours du temps ; et
- générer des instructions de vol pour le drone à partir i) de la trajectoire statique déterminée, ii) de la dynamique de déplacement déterminée et iii) des coordonnées de la cible au cours du temps.

On va maintenant décrire un exemple de réalisation du drone selon l'invention, en référence aux dessins annexés où les mêmes références désignent d'une figure à l'autre des éléments identiques ou fonctionnellement semblables.

La Figure 1 est une vue d'ensemble schématique d'un système de prise de vues comprenant un drone et une station au sol.
La figure 2 illustre un exemple de trajectoire du drone pour la prise de vues animée d'une cible.
La Figure 3 est un schéma par blocs d'un ensemble d'unités fonctionnelles de détermination de trajectoire selon l'invention.
La Figure 4 est un schéma par blocs d'un ensemble d'unités fonctionnelles pour la génération d'ordres de pilotage et la commande de l'axe de visée de la caméra du drone.
Les Figures 5A-5E illustrent un ensemble de trajectoires statiques types pour le drone.

On va maintenant décrire un exemple de mise en oeuvre de l'invention.
Elle s'applique à un drone, par exemple un drone de type quadricoptère, tel que le Parrot *Bebop Drone,* dont les divers aspects techniques sont décrits dans les EP 2 364 757 A1, EP 2 613 213 A1, EP 2 450 862 A1 ou encore EP 2 613 214 A1 précités.
Le drone D comporte des rotors coplanaires dont les moteurs sont pilotés indépendamment par un système intégré de navigation et de contrôle d'attitude. Il est pourvu d'une caméra C à visée frontale permettant d'obtenir une image de la scène vers laquelle est orienté le drone.
Le drone peut comporter également de préférence une seconde caméra à visée verticale (non représentée) pointant vers le bas, apte à capter des images successives du terrain survolé et utilisée notamment pour évaluer la vitesse du drone par rapport au sol.
Des capteurs inertiels (accéléromètres et gyromètres) permettent de mesurer avec une certaine précision les vitesses angulaires et les angles d'attitude du drone, c'est-à-dire les angles d'Euler (tangage, roulis et lacet) décrivant l'inclinaison du drone par rapport à un plan horizontal d'un repère terrestre fixe, étant entendu que les deux composantes longitudinale et transversale de la vitesse horizontale sont intimement liées à l'inclinaison suivant les deux axes respectifs de tangage et de roulis. Un télémètre à ultrasons disposé sous le drone fournit par ailleurs une mesure de l'altitude par rapport au sol. Le drone est également pourvu de moyens de localisation permettant de déterminer sa position absolue dans l'espace, notamment à partir de données issues d'un récepteur GPS, ou par d'autres moyens, par exemple par intégration des mesures produites par les capteurs de la centrale inertielle.

La caméra C est de préférence une caméra fixe de type *fish-eye* à champ hémisphérique, comme décrit par exemple dans le EP 2 933 775 A1 (Parrot). Avec une telle caméra, les changements de l'axe de visée de la caméra sont réalisés non pas par déplacement physique de la caméra, mais par recadrage et retraitement des images prises par la caméra en fonction d'un angle de visée virtuel, déterminé par rapport à l'axe principal du drone, donné en consigne.

Le drone D est piloté par une station au sol T, typiquement sous la forme d'une télécommande, par exemple de type télécommande d'aéromodélisme, d'un téléphone intelligent ou d'une tablette intelligente. Le téléphone intelligent ou la tablette intelligente sont pourvus d'un écran tactile E affichant l'image embarquée par la caméra frontale C, avec en superposition un certain nombre de symboles permettant l'activation de commandes de pilotage par simple contact du doigt d'un utilisateur sur l'écran tactile E. Lorsque le drone D est piloté par une station T de type télécommande, l'utilisateur peut être pourvu de lunettes de pilotage en immersion, souvent dénommées lunettes FPV (*First Person View*). L'appareil T est également pourvu de moyens de liaison radio avec le drone D, par exemple de type réseau local Wi-Fi (IEEE 802.11), pour l'échange bidirectionnel de données du drone D vers l'appareil T, notamment pour la transmission de l'image captée par la caméra C et de données de vol, et de l'appareil T vers le drone D pour l'envoi de commandes de pilotage.

Selon l'invention, le système constitué par le drone D et l'appareil T est configuré pour pouvoir donner au drone la faculté de suivre et de filmer de manière autonome une cible, typiquement la cible constituée par l'appareil T lui-même porté par l'utilisateur, en offrant à l'utilisateur la possibilité de déclencher des trajectoires automatiques pour produire facilement des plans intéressants et esthétiques.

Ces plans sont définis par des trajectoires tridimensionnelles recalculées en temps réel relativement à la position de l'utilisateur.

Avantageusement, l'utilisateur peut déclencher l'animation par une simple pression sur un bouton de l'écran tactile du terminal T, le drone exécutant les déplacements tout en gardant cadré dans la video le sujet portant le terminal.

Selon un aspect de l'invention, le système sépare i) la définition statique de la forme de la courbe 3D représentant la trajectoire adoptée par le drone D de ii) la manière dont cette courbe est parcourue dans le temps.

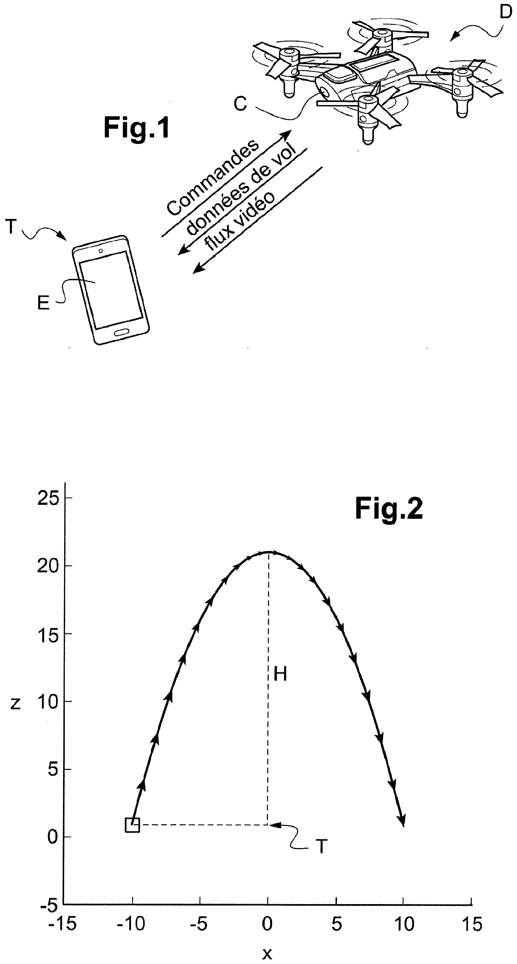

En référence maintenant à la Figure 2, on va expliquer plus en détail la génération d'une trajectoire particulière pour réaliser une prise de vues animées visant la cible.

Dans l'exemple pris ici à des fins purement illustratives, la forme de la trajectoire du drone est celle d'une courbe en cloche C : le drone filme la cible en parcourant une parabole passant juste au-dessus de la cible (en l'espèce l'utilisateur, qui porte l'appareil T) pour se retrouver de l'autre côté.

Cette trajectoire pourrait dans une première approche être définie simplement par l'équation paramétrique d'une parabole, à savoir :

$$X(t) = t$$

$$Z(t) = H-(t-t0)^2$$

Mais si l'on décrit cette courbe au cours du temps, on comprend que les vitesses de déplacement sont importantes au début et à la fin, et que le drone va ralentir au sommet de la parabole. Ceci s'explique par le fait que la manière dont on exprime la forme de la courbe est intimement liée à celle avec laquelle on la décrit au cours du temps (ici en l'occurrence une vitesse constante selon l'axe X).

Selon l'invention, le système est agencé pour permettre à l'utilisateur de contrôler le déroulement de l'animation en pouvant influencer la vitesse de déplacement du drone sur la trajectoire choisie, de manière à pouvoir accélérer le déplacement, le ralentir, immobiliser le drone pendant un certain moment, voire même l'amener à parcourir la trajectoire en sens inverse.

On utilise à cet effet une architecture électronique de pilotage, de préférence une architecture logicielle, qui permet de séparer la génération des trajectoires et la génération de la manière dont le drone va se déplacer sur ces trajectoires.

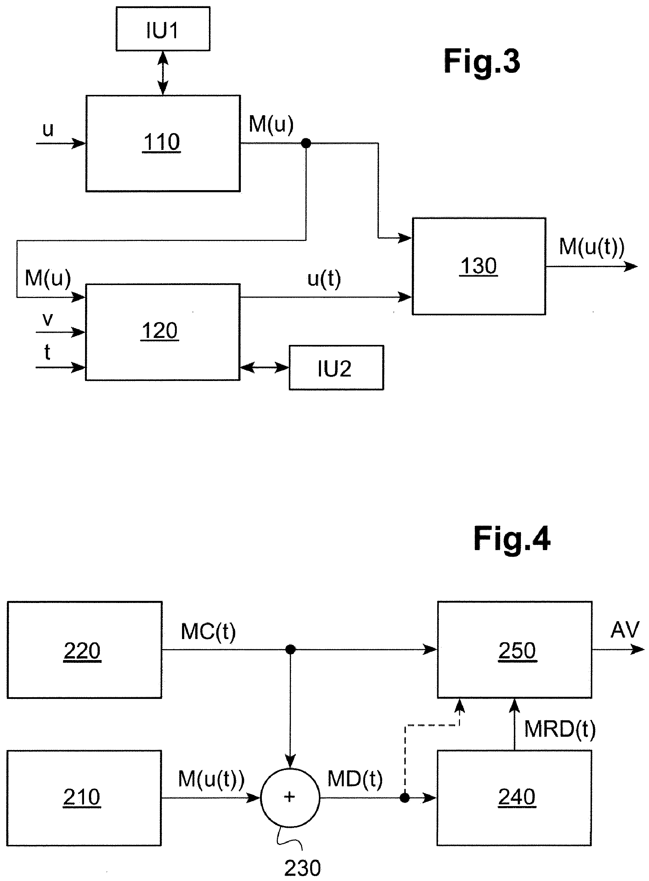

En référence à la figure 3, le bloc 110 a pour objet de décrire la forme de la trajectoire, à savoir de la courbe dans l'espace à trois dimensions que le drone va décrire, indépendamment de toute dynamique. Cette trajectoire est décrite par une courbe paramétrée :

$$M(u) = (x(u), y(u), z(u))$$

avec un début à $u=u0$ et une fin à $u=u1$.

Dans le présent exemple, la trajectoire est décrite par rapport à l'origine $O(0,0,0)$, qui représente la position du terminal T porté par l'utilisateur. Dans le présent exemple d'une parabole, on a :

$$x(u) = (1-2u).x0$$

$$y(u) = (1-2u).y0$$

$$z(u) = 4*u*(u-1).H+z0$$

avec $u0 = 0$, $u1 = 1$ et $M0(x0,y0,z0)$ la position du drone par rapport à l'utilisateur au lancement de l'animation.

Toujours en référence à la Figure 3, le bloc 120 a pour objet, une fois la forme de la trajectoire définie, de définir à chaque instant la vitesse de parcours de cette trajectoire par le drone. Le bloc 120 admet en entrée la vitesse souhaitée v, qui peut :

- soit dépendre de la progression de la trajectoire, par exemple pour ralentir au début et à la fin :

$$v = v(u) = v(u(t))$$

- soit être redéfinie à chaque instant, par exemple par une programmation de l'utilisateur, soit :

$$v=v(t)$$

Le bloc 120 reçoit également en entrée la courbe $M(u)$ et le temps $t$. A partir des paramètres, $M(u)$, $v$ et $t$, le bloc 120 détermine l'évolution du paramètre $u$ en fonction du temps par les étapes suivantes :

- calcul du gradient de la trajectoire à la position courante :

$$g = dM/du(u)$$

- calcul de la vitesse curviligne désirée $v = v(t)$ ou $v = v(u(t))$ ; et
- détermination de l'incrément du paramètre $u$ correspondant à un incrément de temps $dt$, soit :

$$u(t+dt) = u(t) + v*dt/\|g\|$$

On notera ici que dans les cas où la trajectoire est mal définie et comprend des singularités, le gradient peut être nul. La notion de vitesse n'a alors pas de sens puisque $M(t)$ n'est pas dérivable à cet instant. On incrémente donc le paramétrage $u$ d'un petite variation $du$ pour sortir de la singularité, soit :

$$u(t+dt) = u(t)+du$$

où $du$ est fixé et très petit devant $|u1-u0|$.

On obtient donc en sortie du bloc 120 l'évolution du paramétrage $u$ en fonction du temps $t$.

Il est alors possible d'engendrer la consigne de position du drone à chaque instant en calculant $M(u(t))$.

Ce calcul est effectué par le bloc 130 de la Figure 3.

La trajectoire ainsi générée vérifie alors les propriétés suivantes :

- $M(t) = M(u(t))$ : la trajectoire est conforme à la forme désirée ;
- à tout instant, la vitesse désirée est respectée : $||dM/dt|| = |v(t)|$ ;
- $u(t)$ est strictement croissante et varie de $u0$ à $u1$ en un temps fini si $v(t) > vmin > 0$ ; et
- $u(t)$ est strictement décroissante et atteint la valeur de départ $u0$ en un temps fini si $v(t) < -vmin < 0$.

Une fois la trajectoire statique définie et la dynamique sur cette trajectoire prise en compte comme décrit ci-dessus, le système détermine la position que doit adopter le drone D en tenant compte également de la position de la cible constituée ici du terminal T qui se déplace avec l'utilisateur. Il détermine également la consigne d'axe de visée de la caméra.

La Figure 4 illustre sous forme de schéma par blocs l'ensemble des traitements mis en oeuvre.

Le bloc 210 correspond à l'ensemble des blocs 110 à 130 de la Figure 3 et fournit les coordonnées de la trajectoire dynamique $M(u(t))$.

Le bloc 220 fournit les coordonnées $MC(t)$ de la cible, issues de préférence d'une unité GPS du terminal T constituant lui-même la cible.

L'additionneur 230 détermine les consignes de coordonnées du drone D, notées $MD(t)$, en additionnant les coordonnées $MC(t)$ et les coordonnées de trajectoire $M(u(t))$.

Ces consignes de coordonnées sont appliquées au système de pilotage du drone (bloc 240) pour qu'il suive ces consignes.

Par ailleurs, les coordonnées de la cible $MC(t)$ et les coordonnées de position réelle du drone $(MRD(t))$ à la suite des consignes $MD(t)$ (ou bien directement la consigne $MD(t)$) sont appliquées aux entrées d'un bloc 250 dont le rôle est de définir les coordonnées de l'axe de visée de la caméra C du drone de façon à générer des images centrées sur la cible, en l'occurrence sur l'utilisateur portant le terminal T.

La détermination de cet axe s'effectue, dans une forme de réalisation de base, par soustraction entre les coordonnées de la cible et les coordonnées du drone.

Dans une forme de réalisation préférée, le bloc 110 accède à une mémoire dans laquelle sont stockées un ensemble de trajectoires statiques, et le terminal T est doté d'une interface utilisateur IU1, de préférence une interface tactile, permettant de choisir avant le vol l'une de ces trajectoires. De préférence, cette interface IU1 permet également d'ajuster certains paramètres de la trajectoire (voir exemples de trajectoires, et leurs paramètres, dans la suite).

Le bloc 120 est quant à lui relié fonctionnellement à une interface utilisateur IU2 permettant de régler la dynamique du parcours sur la trajectoire sélectionnée au niveau du bloc 110.

De nombreuses possibilités peuvent être envisagées sur ce réglage :

- un certain nombre de boutons avec des options prédéfinies (vitesse constante, vitesse variant aléatoirement autour d'une moyenne, vitesse croissante ou décroissante, avec le cas échéant des points à vitesse nulle, etc.) ;
- une interface tactile sur laquelle la trajectoire statique est affichée et sur laquelle l'utilisateur peut à l'aide de son doigt ajuster la vitesse zone par zone, définir des points d'arrêt et de retour, etc.

Les deux options ci-dessus peuvent bien entendu être combinées.

On notera ici que les traitements illustrés sur les Figures 3 et 4 sont ici mis en oeuvre par une unité centrale de traitement équipant le terminal T.

Dans des variantes de réalisation, tout ou partie de ces traitements peuvent être mis en oeuvre dans une unité centrale de traitement embarquée dans le drone D. Les interfaces utilisateurs IU1 et U2 sont générées au niveau de l'écran tactile E du terminal, la liaison avec les blocs respectifs 110 et 120 s'effectue donc soit au sein du terminal T, soit via la liaison sans fil entre le terminal et le drone dans le cas où les traitements correspondants sont exécutés dans le drone.

Dans d'autres variantes encore, les traitements précités peuvent être opérés au sein d'un serveur *cloud* distant auprès duquel est enregistré le drone. Ce dernier est alors pourvu, en plus du module de communication WiFi par lequel il échange des données avec le terminal T, d'un autre module de communication lui permettant de se connecter directement à un réseau de téléphonie mobile 3G ou 4G. Il est alors possible de déporter dans ce serveur *cloud* un certain nombre d'opérations et calculs de pilotage, de traitement d'image, etc. au lieu de les exécuter au sein d'un processeur embarqué dans le drone ou le terminal de télécommande.

Par ailleurs, la séquence d'images prise par la caméra C du drone D au cours de son parcours peuvent être soit stockée dans une mémoire embarquée dans le drone puis transférée vers le terminal ou un autre équipement intelligent à l'issue du vol, soit transmise en flux pendant la prise de vues elle-même, et stockée dans le terminal T, ou encore transférée au serveur *cloud* dans l'hypothèse indiquée ci-dessus.

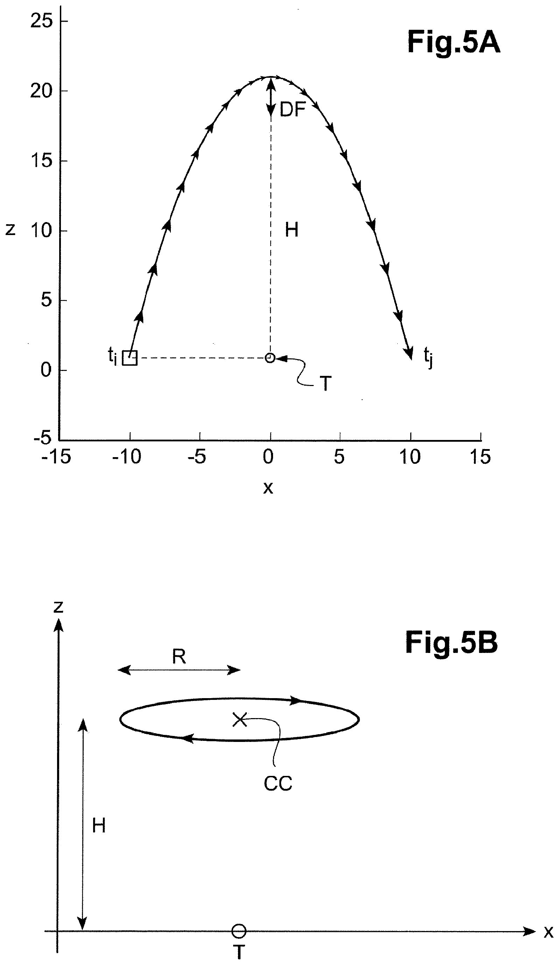

On a illustré sur les figures 5A à 5E un certain nombre d'exemples de trajectoires statiques possibles :

- déplacement "en cloche" sur une parabole (Figure 5A, voir également Figure 2) : le drone monte, passe au-dessus de la cible T, et redescend pour interrompre la séquence au point symétrique du point de départ ; on peut faire varier le paramètre de distance focale (DF) de la parabole (parabole plus ou moins large), et régler les positions $t_i$ et $t_f$ de début et de fin de filmage, déterminant elles-mêmes la hauteur (H) de la trajectoire ; on peut également prévoir un déplacement sur une portion d'un cercle ou de toute autre courbe contenue dans un plan vertical ;

- cercle d'altitude constante (Figure 5B) : le drone parcourt un cercle dont le centre (CC) se trouve à l'aplomb de la cible T ; on peut faire varier les paramètres d'altitude (H), de rayon (R) du cercle et de positions de début et de fin ; on peut envisager aussi un cercle contenu dans un plan incliné ou toute autre courbe fermée sur elle même ou non telle qu'une ellipse, etc. ;

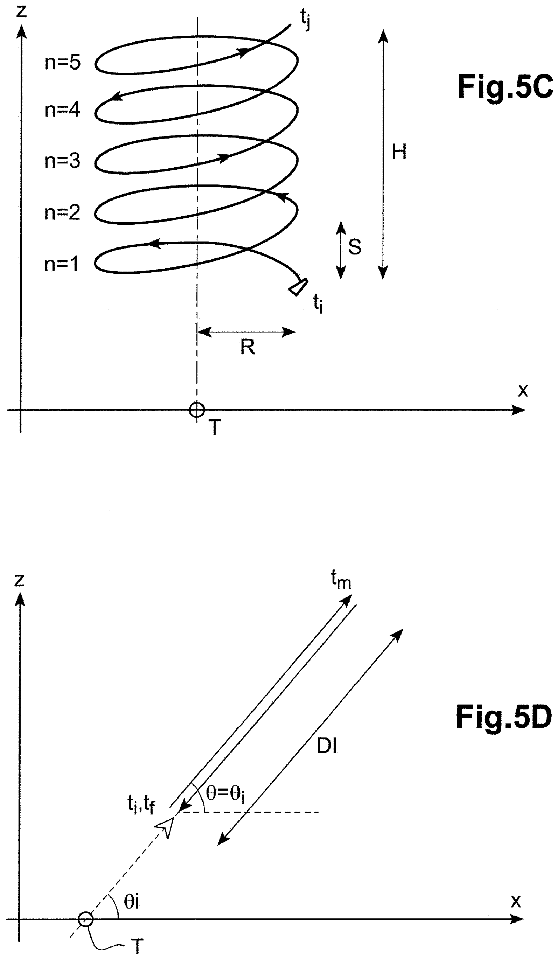

- hélice montante ou descendante (Figure 5C) : le drone parcourt un ou plusieurs cercles tout en montant d'une hauteur donnée ; on peut faire varier le pas (S) de l'hélice, son rayon (R), l'orientation de son axe et le nombre de tours à parcourir, qui lui-même détermine en combinaison avec le pas la variation de hauteur totale (H) de la trajectoire ; on peut également faire varier le rayon en fonction de la hauteur, pour obtenir une hélice inscrite dans un cône ;

- déplacement "en boomerang" (Figure 5D), avec un premier trajet sur une droite oblique et un retour sur la même droite ; le drone réalise un mouvement occasionnant une prise de vues en zoom arrière en s'écartant de la cible sur une distance DI, puis revient à son point de départ pour réaliser un zoom avant : la cible T peut être dans le prolongement de la droite, ou ailleurs ; en outre, on peut faire varier l'angle ($\theta$) de la droite et sa longueur (DI) ; on peut en variante prévoir une trajectoire incurvée ;

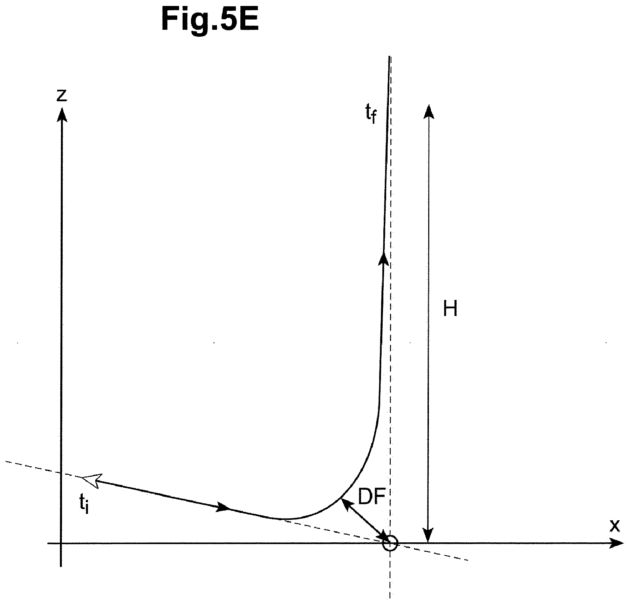

- déplacement "en chandelle" (Figure 5E), sur une trajectoire typiquement de type hyperbolique : le drone se dirige vers la cible, puis sa trajectoire s'incurve à proximité de la cible et il remonte pour se placer à la verticale de la cible ; on peut faire varier les paramètres d'inclinaison des deux asymptotes, la distance focale (DF) déterminant un changement de direction plus ou moins brusque, et les positions $t_i$ et $t_f$ de début et de fin de séquence (voir en particulier la position de fin de séquence $t_f$ correspondant à une altitude H) ; par ailleurs, la cible peut se trouver sur la deuxième asymptote, ou non.

**Revendications**

1. Système de prise de vues animées, comprenant un drone (D) pourvu d'une caméra (C) et une station au sol (T) communiquant par une liaison sans fil avec le drone,
les déplacements du drone étant définis par des ordres de pilotage appliqués à un groupe propulseur ou un ensemble de groupes propulseurs du drone, le drone étant apte à se déplacer selon une trajectoire au moins en partie prédéterminée pour réaliser une prise de vues animée d'une cible (T), et à ajuster l'angle de visée de la caméra (C) au cours des déplacements du drone et le cas échéant de la cible pour qu'à chaque instant l'image prise par la caméra contienne la position de la cible,
ce système comprenant :

- des moyens (110) pour déterminer une trajectoire statique du drone par rapport à la cible pour la prise de vues ;
- des moyens (220) pour produire des informations de position de la cible au cours du temps ; et
- des moyens (130, 230, 240) pour générer des instructions de vol pour le drone à partir i) de la trajectoire statique déterminée et ii) des informations de position de la cible,

le système étant **caractérisé en ce qu'**il comprend en outre :

- des moyens (120) pour déterminer, séparément de la détermination de la trajectoire statique, une dynamique de déplacement du drone sur la trajectoire statique,

et **en ce que** les moyens (130, 230, 240) pour générer les instructions de vol pour le drone sont aptes à générer lesdites instructions également à partir iii) de la dynamique de déplacement du drone sur la trajectoire statique.

2. Système selon la revendication 1, **caractérisé en ce que** les moyens (110) pour déterminer une trajectoire statique du drone comprennent des moyens associés à une interface utilisateur (IU1) de la station au sol (T) pour sélectionner une trajectoire parmi un ensemble de trajectoires mémorisées.

3. Système selon la revendication 2, **caractérisé en ce que** les moyens (110) pour déterminer une trajectoire statique du drone comprennent des moyens associés à une interface utilisateur (IU1) pour faire ajuster au moins un paramètre de la trajectoire sélectionnée.

4. Système selon la revendication 2, **caractérisé en ce que** les trajectoires mémorisées comprennent au moins deux trajectoires choisies dans le groupe suivant : les trajectoires en cloche, les trajectoires sur courbe fermée, les trajectoires en hélice, les trajectoires en chandelle.

5. Système selon la revendication 1, **caractérisé en ce qu'**il comprend des moyens (110) pour ajuster sur la trajectoire déterminée une position de début de prise de vues et une position de fin de prise de vues.

6. Système selon la revendication 1, **caractérisé en**

**ce que** les moyens (120) pour déterminer une dynamique de déplacement du drone sur la trajectoire statique comprennent une interface utilisateur (IU2) permettant de déterminer une évolution de vitesse sur la trajectoire statique.

7. Système selon la revendication 6, **caractérisé en ce que** la détermination de l'évolution de la vitesse comprend la détermination de points d'arrêt du drone.

8. Système selon la revendication 1, **caractérisé en ce que** la caméra est une caméra fixe à champ large de type *fish-eye*, et **en ce qu'**il comporte des moyens d'ajustement dudit angle de visée de la caméra, aptes à recadrer et retraiter les images à champ large prises par la caméra.

9. Système selon la revendication 1, **caractérisé en ce que** la caméra est une caméra montée sur un support articulé trois-axes de type *gimbal* avec suspension à la Cardan muni de servomoteurs, et **en ce qu'**il comporte des moyens d'ajustement dudit angle de visée de la caméra, aptes à piloter lesdits servomoteurs.

10. Station au sol (T), comprenant :

     - des moyens pour communiquer par une liaison sans fil avec un drone (D) pourvu d'une caméra pour lui envoyer des instructions de vol de manière à ce qu'il se déplace selon une trajectoire au moins en partie prédéterminée pour réaliser une prise de vues animée d'une cible liée à la station au sol ;
     - des moyens (110) pour déterminer une trajectoire statique du drone par rapport à la station au sol pour la prise de vues ;
     - des moyens (220) pour produire des informations de position de la station au sol au cours du temps ; et
     - des moyens (130, 230, 240) pour générer lesdites instructions de vol à partir i) de la trajectoire statique déterminée et ii) des informations de position de la station au sol,

     la station étant **caractérisée en ce qu'**elle comprend en outre :

     - des moyens pour (120) pour déterminer une dynamique de déplacement du drone sur la trajectoire statique ; et
     - des moyens (120) pour déterminer, séparément de la détermination de la trajectoire statique, une dynamique de déplacement du drone sur la trajectoire statique,

     et **en ce que** les moyens (130, 230, 240) pour générer les instructions de vol pour le drone sont aptes à générer lesdites instructions également à partir iii) de la dynamique de déplacement du drone sur la trajectoire statique.

11. Procédé pour déterminer une trajectoire devant être suivie par un drone (D) pour la réalisation d'une prise de vues animées d'une cible le cas échéant en mouvement, **caractérisé en ce qu'**il comprend les étapes suivantes :

     - déterminer une trajectoire statique devant être parcourue par le drone par rapport à la cible ;
     - déterminer, séparément de la détermination de la trajectoire statique, une dynamique de déplacement du drone sur cette trajectoire statique ;
     - déterminer les coordonnées de la cible au cours du temps ; et
     - générer des instructions de vol pour le drone à partir i) de la trajectoire statique déterminée, ii) de la dynamique de déplacement déterminée et iii) des coordonnées de la cible au cours du temps.

**Fig.1**

Commandes
données de vol
flux vidéo

**Fig.2**

# Fig.3

# Fig.4

**Fig.5A**

**Fig.5B**

**Fig.5C**

**Fig.5D**

# Fig.5E

Europäisches
Patentamt

European
Patent Office

Office européen
des brevets

**RAPPORT DE RECHERCHE EUROPEENNE**

Numéro de la demande

EP 17 18 0644

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 3 031 402 A1 (SQUADRONE SYSTEM [FR]) 8 juillet 2016 (2016-07-08) | 1-4,6-8, 10,11 | INV. G05D1/00 A63H27/00 |
| Y | * Page 1 lignes 1-2, page 2 lignes 9-16, 19-25, page 3 lignes 5-37, page 4 lignes 17-33, Figures 1-5 * | 5,9 | |
| Y | US 9 164 506 B1 (ZANG BO [CN]) 20 octobre 2015 (2015-10-20) * Colonne 8 lignes 62-67, colonne 9 lignes 5-8, colonne 15 lignes 26-34, colonne 47 lignes 6-9, colonne 51 lignes 34-37 * | 5,9 | |

DOMAINES TECHNIQUES RECHERCHES (IPC)

G05D
A63H
B64C
H04N
G01C

Le présent rapport a été établi pour toutes les revendications

| Lieu de la recherche | Date d'achèvement de la recherche | Examinateur |
|---|---|---|
| Munich | 30 novembre 2017 | Roch, Vincent |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 17 18 0644

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-11-2017

| Document brevet cité au rapport de recherche | | Date de publication | Membre(s) de la famille de brevet(s) | | Date de publication |
|---|---|---|---|---|---|
| FR 3031402 | A1 | 08-07-2016 | FR | 3031402 A1 | 08-07-2016 |
| | | | US | 2016194079 A1 | 07-07-2016 |
| US 9164506 | B1 | 20-10-2015 | CN | 105518555 A | 20-04-2016 |
| | | | CN | 107015572 A | 04-08-2017 |
| | | | CN | 107168352 A | 15-09-2017 |
| | | | CN | 107291104 A | 24-10-2017 |
| | | | EP | 3060966 A1 | 31-08-2016 |
| | | | JP | 2017503226 A | 26-01-2017 |
| | | | US | 9164506 B1 | 20-10-2015 |
| | | | US | 2016031559 A1 | 04-02-2016 |
| | | | US | 2017023938 A1 | 26-01-2017 |
| | | | US | 2017068246 A1 | 09-03-2017 |
| | | | US | 2017108877 A1 | 20-04-2017 |
| | | | US | 2017322551 A1 | 09-11-2017 |
| | | | WO | 2016015251 A1 | 04-02-2016 |

Pour tout renseignement concernant cette annexe : voir Journal Officiel de l'Office européen des brevets, No.12/82

EPO FORM P0460

**EP 3 273 317 A1**

## RÉFÉRENCES CITÉES DANS LA DESCRIPTION

**Documents brevets cités dans la description**

- WO 2010061099 A2
- EP 2364757 A1, Parrot SA
- EP 2933775 A1
- FR 3031402 A1
- US 2016194079 A1
- US 9164506 B1
- EP 2613213 A1
- EP 2450862 A1
- EP 2613214 A1